(19) Europäisches Patentamt
European Patent Office
Office européen des brevets

(11) Publication number: 0 476 967 B1

## EUROPEAN PATENT SPECIFICATION

(45) Date of publication of patent specification: 22.02.95

(51) Int. Cl.⁶: **B60C 11/00**, B60C 11/04

(21) Application number: 91308462.0

(22) Date of filing: 17.09.91

(54) **Pneumatic radial tyre.**

(30) Priority: 18.09.90 JP 247954/90

(43) Date of publication of application:
25.03.92 Bulletin 92/13

(45) Publication of the grant of the patent:
22.02.95 Bulletin 95/08

(84) Designated Contracting States:
**DE FR GB**

(56) References cited:
EP-A- 0 050 197
EP-A- 0 304 287
EP-A- 0 370 747

**PATENT ABSTRACTS OF JAPAN vol. 9, no.
264 (M-423)(1987) 22 October 1985 & JP-A-60
110 510 (YOKOHAMA GOMU K.K.) 17 June
1985**

(73) Proprietor: **SUMITOMO RUBBER INDUSTRIES
LIMITED**
**1-1 Tsutsuicho 1-chome**
**Chuo-ku**
**Kobe-shi**
**Hyogo-ken (JP)**

(72) Inventor: **Uemura, Yoshiaki**
**32-104, 1-2, Ryuga-dai 1-chome,**
**Suma-ku**
**Kobe-shi,**
**Hyogo (JP)**

(74) Representative: **Stewart, Charles Geoffrey**
**SP TYRES UK LIMITED**
**Technical Division**
**Fort Dunlop,**
**Erdington,**
**Birmingham B24 9OT (GB)**

## Description

This invention relates to a pneumatic radial tyre having an improved running stability.

It is common practice in North America and Europe to ensure the running stability of vehicles during rain by providing road surfaces with so called "rain grooves" to predetermined specifications that extend generally parallel to the direction in which the vehicles run.

However, conventional pneumatic tyres are provided with grooves (which may be straight or zigzag) extending in the circumferential direction of the tread surface. Thus when a vehicle with such tyres runs on a road having "rain grooves" on its surface, the tread grooves of the vehicle's tyres tend to interfere with the "rain grooves" and the vehicle undergoes movement which is a phenomenon generally referred to as "rain groove wandering", giving discomfort to the occupants. This problem is particularly noticeable in pneumatic radial tyres that have high tread rigidity and tread regions that are tightly clamped or stiffened by many belt or breaker cords.

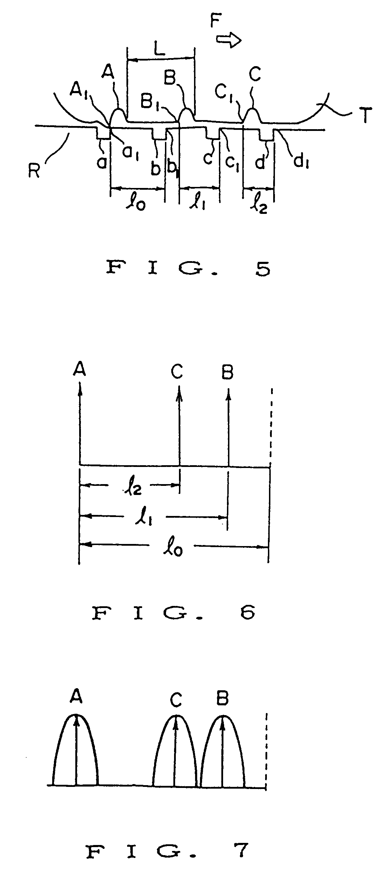

Such interference between tread grooves in a radial tyre and rain grooves on the surface of a road is described below in detail with reference to Figs. 5 and 6. The tread surface of a pneumatic radial tyre T is provided with tread grooves A, B and C at a pitch L in the circumferential direction. A number of rain grooves are provided at a pitch $\ell_0$ on the surface of a road R in a direction parallel to tyre running. Taking four rain grooves a, b, c and d as typical examples, we will discuss below how those rain grooves interfere with the pneumatic radial tyre T. In the following discussion, it is assumed that the vehicle runs in a direction normal to the paper.

First suppose that tread grooves A, B and C are relatively positioned with respect to rain grooves a, b, c and d as shown in Fig.5 with interference occurring between the tyre edge $A_1$ of the first tread groove A and the edge $a_1$ of the rain groove a. If the vehicle slips and skids in the direction of arrow F by a distance of $\ell_1$, the tyre edge $B_1$ of the second tread groove B will come into engagement with the edge $c_1$ of the rain groove c to cause interference. If the distance of tyre movement is $\ell_2$, the tyre edge $C_1$ of the third tread groove C will come into engagement with the edge $d_1$ of the rain groove d to cause intereference.

This state of interference between tread grooves A, B and C and rain grooves a, b, c, and, d may be expressed by a interaction distribution as shown in Fig. 6. The distribution diagram of Fig.6 is approximated by wave forms and each spike is transformed from a single pulse to a distribution of cosine function (see Fig.7).

Supposing that this is expressed by $F(x) = \cos(\pi/40)x$, this cosine function may be expanded into a Fourier series to give:

$$I(x) = \frac{a_0}{2} + \sum_{n=1}^{\infty} (a_n \cos 2\pi n f_1 x + b_n \sin 2\pi f_1 x)$$

On the basis of this Fourier series, the values of the first and second order amplitudes, $X_1$ and $X_2$ may be determined as follows:

$X_1 = \sqrt{(a_1{}^2 + b_1{}^2)}$  $X_2 = \sqrt{(a_2{}^2 + b_2{}^2)}$

It has empirically been verified that the interference between tread grooves and rain grooves is small if the value of the first order amplitude x1 is small. The value of dispersion D is calculated by the following equation.

$$D = \log_{10}(X_1{}^2 \Big/ \sum_{m=2}^{5} X_m)$$

If the calculated value of D is small, particularly D<0, one assumes that small interference will occur between tread grooves and rain grooves and it has been attempted to solve the aforementioned problem of "rain groove wandering" by determining the pitch of tread grooves in such a way that the condition of D<0 is satisfied.

However, as more tread grooves are formed in recent pneumatic radial tyre tread patterns the chance of interference between tread grooves and rain grooves increases and even if the condition of D<0 is satisfied, the interference between tread grooves and rain grooves cannot be sufficiently reduced to ensure good high running stability properties.

The object of the present invention is to provide a pneumatic radial tyre that has improved running stability by reducing the above type of interference between tread grooves and rain grooves.

Accordingly the present invention provides a pneumatic radial tyre having at least two continous longitudinal tread grooves provided in the circumferential direction of the tread, wherein an interaction distribution diagram showing the state of interference between the edges of tread grooves and the edges of rain grooves is approximated by waveforms and expanded into a Fourier series, with the value of the first-order amplitude $X_1$ being lower than a value of the second-order amplitude $X_2$ or third-order amplitude $X_3$, wherein said Fourier series is represented by the following equation:

$$I(x) = \frac{a_0}{2} + \sum_{n=1}^{\infty} (a_n \cos 2\pi n f_1 x + b_n \sin 2\pi n f_1 x)$$

and said value of the first-order amplitude $X_1$, second-order amplitude $X_2$ and third-order amplitude $X_3$ is represented by the following equation:

$$X_n = \sqrt{a_n^2 + b_n^2} \ ( \text{ wherein n is } 1,2,3,....);$$

and a value of dispersion D is represented by the following inequality:

$$D = \log_{10}(X_1^2 \bigg/ \sum_{m=2}^{5} X_m) \leq -1.5$$

and whereas the value of the second-order amplitude $X_2$ is enhanced to meet a condition of:

$$E_2 = X_2 \bigg/ \sum_{m=1}^{5} X_m \geq 0.4$$

or whereas the value of the third-order amplitude $X_3$ is enhanced to meet the condition of:

$$E_3 = X_3 \bigg/ \sum_{m=1}^{5} X_m \geq 0.4$$

and said longitudinal tread grooves are symmetrically arranged with respect to the equatorial plane of the tyre.

By reducing the value of the first order amplitude, the value of dispersion can be reduced. In addition, by enhancing the value of the second order amplitude or a higher order amplitude, the value of dispersion can be further reduced. As a result, the state (e.g. frequency and intensity) of interference between tread grooves and rain grooves, which is the cause of rain groove wandering, can be sufficiently reduced to improve the running stability of the pneumatic radial tyre.

Fig.1. shows the transverse cross section of a pneumatic radial tyre tread of the present invention shown in contact with the surface of a road;

Fig.2 is a diagram showing the interaction distribution that develops in the case where the value of the first order amplitude is reduced whereas that of the second order amplitude is increased in accordance with the present invention;

3

Fig. 3 is a diagram showing the interaction distribution that develops in the case where the value of the first order amplitude is reduced whereas that of the third order amplitude is increased;

Fig.4 is a diagram showing the interaction distribution that develops in a conventional pneumatic radial tyre having only the value of the first order magnitude reduced;

Fig.5 shows a conventional pneumatic radial tyre in contact with the road surface;

Fig.6 is a diagram showing the interaction distribution that occurs in the tyre shown in Fig.5; and

Fig.7 is a graph showing a function obtained by waveform approximation of the force distribution shown in Fig.6.

A pneumatic radial tyre has tread grooves provided in the circumferential direction of the tread and is mounted on a standard measuring rim. Under a predetermined inflation pressure (e.g. 2 kg/cm$^2$) and a predetermined load (either a working design load or an equivalent thereof), the width of a tread groove, w, and the number of tread grooves, N, in the region of the tyre which is in contact with the road surface satisfy the respective relations W $\geq$ 2mm and N $\geq$ 2. In other words, at least two tread grooves are present in the area of the tread which is in contact with the road surface, with each of those tread grooves having a width of at least 2 mm.

The state of interference between the edges of those tread grooves and the edges of rain grooves is expressed in a diagram showing the interaction distribution. Using cos($\pi$/40)x as a function for transformation of single pulses, the distribution diagram may be approximated by wave forms so that the single pulses are transformed to a distribution of a cosine function, namely, F(x) = cos($\pi$/40)x. This cosine function may be expanded into a Fourier series to give:

$$I(x) = \frac{a_0}{2} + \sum_{n=1}^{\infty} (a_n \cos 2\pi n f_1 x + b_n \sin 2\pi n f_1 x)$$

On the basis of the resulting Fourier series, the values of the first-order, second-order and nth-order amplitudes, $X_1$, $X_2$, and $X_n$, are determined as follows:-

$X_1 = \sqrt{(a_1{}^2 + b_1{}^2)}$
$X_2 = \sqrt{(a_2{}^2 + b_2{}^2)}$
$X_n = \sqrt{(a_n{}^2 + b_n{}^2)}$

From the value of the first order amplitude, $X_1$, the value of dispersion D is calculated as follows:-

$$D = \log_{10}\left(X_1{}^2 \middle/ \sum_{m=2}^{5} X_m\right)$$

As shown by this equation, the value of dispersion D can be reduced by reducing $X_1$ to a smaller value. In accordance with the present invention, the value of D is further reduced by enhancing the values of higher-order amplitudes.

The nth-order enhancement, $E_n$ of the nth-order amplitude $X_n$ (where n $\geq$ 2), is calculated by the following equation:

$$E_n = X_n \middle/ \sum_{m=1}^{5} X_m$$

In accordance with the present invention, the value of dispersion D

$$[\; = \log_{10}(X_1^2 \Big/ \sum_{m=2}^{5} X_m)\;]$$

is sufficiently reduced by satisfying the relation D≦-1.5 and by determining the pattern of tread grooves in such a way that the second order amplitude $X_2$ or the third order amplitude $X_3$ are enhanced to meet the following condition.

$$E_2 = X_2 \Big/ \sum_{m=1}^{5} X_m \geq 0.4$$

By adopting this tread configuration, the state (e.g. frequency and intensity) of interference between tread grooves and rain grooves which is the cause of rain groove wandering can be sufficiently reduced to improve the running stability of a pneumatic radial tyre.

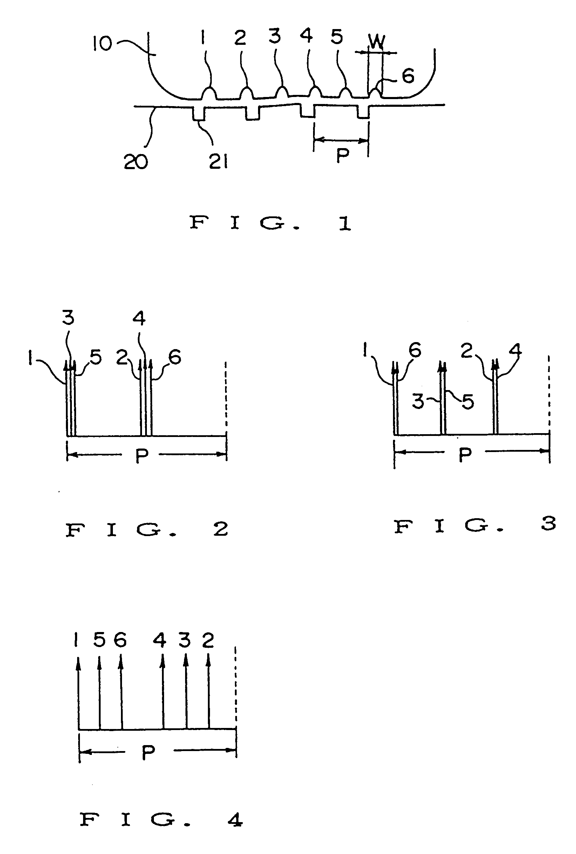

A performance test was conducted on sample pneumatic radial tyres A & B incorporating the concept of the present invention and samples C of a conventional pneumatic radial tyre. Each sample indicated by 10 in Fig. 1 had seven ribs in the tread to provide six tread grooves 1-6. In sample A of the present invention, the value of the first-order amplitude $X_1$ was reduced whereas the value of the second order amplitude $X_2$ was increased (giving the second order enhancement) see the interaction distribution diagram of Fig.2), and in Sample B of the present invention, the value of $X_1$ as reduced but, at the same time, the value of the third order amplitude $X_3$ was increased (giving the third order enhancement) (see the interaction distribution diagram of Fig.3). Conventionally, Sample C, only the value of $X_1$ has been reduced (see the interaction distribution diagram of Fig.4). Each tyre was run on a road having rain grooves 21 provided on the surface 20 at a pitch p of 19 mm in a direction parallel to the tyre running according to the Los Angeles (North America) specifications.

The test results are shown in Table 1 below.

Table 1

| Sample | Values of amplitude | | | | | Dispersion D $\log_{10}(x_1^2/\sum\limits_{m=2}^{5}x_m)$ | Second-order enhancement $E_2$ $x_2/\sum\limits_{m=2}^{5}x_m$ | Third-order enhancement $E_3$ $x_3/\sum\limits_{m=2}^{5}x_m$ | Results |
|---|---|---|---|---|---|---|---|---|---|
| | $x_1$ | $x_2$ | $x_3$ | $x_4$ | $x_5$ | | | | |
| A (second-order enhancement) | 0.13 | 13.59 | 0.18 | 7.72 | 0.18 | -3.14 | 0.62 | 0.008 | G |
| B (third-order enhancement) | 0.04 | 0.025 | 10.86 | 0.23 | 0.12 | -3.78 | 0.02 | 0.94 | G |
| C (conventional tread pattern) | 1.37 | 2.10 | 1.22 | 1.70 | 0.60 | -0.48 | 0.30 | 0.17 | B |

Note: The results of a running test on an outdoor track were subjectively evaluated by the following criteria: G, good; B, need for improvement

As is apparent from the results of Table 1, tyres samples A and B which were characterised by enhanced values of higher order amplitudes suffered less interference between tread grooves and rain grooves and hence provided better running stability than the conventional tyre, Sample C.

The pneumatic radial tyre of the present invention has the tread configuration described on the foregoing pages, so the stage (e.g. frequency and intensity) of interference between tread grooves and rain grooves which is the cause of "rain groove wandering" can be sufficiently reduced to improve the running stability of the tyre.

While the invention has been described in detail and with reference to specific example thereof, it will be apparent to one skilled in the art that various changes and modifications can be made therein without departing from the spirit and scope thereof.

## Claims

1. A pneumatic radial tyre having at least two continous longitudinal tread grooves (1,2,3,4,5,6) provided in the circumferential direction of the tread, characterized in that an interaction distribution diagram showing the state of interference between the edges of tread grooves (1,2,3,4,5,6) and the edges of rain grooves (21) is approximated by waveforms and expanded into a Fourier series, with the value of the first-order amplitude $X_1$ being lower than a value of the second-order amplitude $X_2$ or third-order amplitude $X_3$, wherein said Fourier series is represented by the following equation:

$$I(x) = \frac{a_0}{2} + \sum_{n=1}^{\infty} (a_n \cos 2\pi n f_1 x + b_n \sin 2\pi n f_1 x)$$

and said value of the first-order amplitude $X_1$, second-order amplitude $X_2$ and third-order amplitude $X_3$ is represented by the following equation:

$X_n = \sqrt{(a_n^2 + b_n^2)}$ ( wherein n is 1,2,3,....);

and a value of dispersion (D) is represented by the following inequality:

$$D = \log_{10}(X_1^2 / \sum_{m=2}^{5} X_m) \leq -1.5$$

and whereas the value of the second-order amplitude $X_2$ is enhanced to meet a condition of:

$$E_2 = X_2 / \sum_{m=1}^{5} X_m \geq 0.4$$

or whereas the value of the third-order amplitude $X_3$ is enhanced to meet the condition of:

$$E_3 = X_3 / \sum_{m=1}^{5} X_m \geq 0.4$$

and said longitudinal tread grooves (1,2,3,4,5,6) are symmetrically arranged with respect to the equatorial plane of the tyre.

**Patentansprüche**

1. Ein Radialluftreifen mit wenigstens zwei durchgehenden Längslaufrillen (1,2,3,4,5,6), die in Umfangsrichtung der Lauffläche vorgesehen sind, dadurch gekennzeichnet, daß ein Wechselwirkungsverteilungsdiagramm den Zustand der Wechselwirkung zwischen den Kanten der Laufrillen (1,2,3,4,5,6) und den Kanten der Regenrillen (21), die durch Wellenformen angenähert sind, zeigt und in eine Fourier-Reihe mit dem Wert der Amplitude $X_1$ erster Ordnung, der kleiner ist als ein Wert der Amplitude $X_2$ zweiter Ordnung oder der Amplitude $X_3$ dritter Ordnung zerlegt ist, wobei die Fourier-Reihen durch folgende Gleichung darstellt sind:

$$I(x) = \frac{a_0}{2} + \sum_{n=1}^{\infty} (a_n \cos 2\pi n f_1 x + a_n \sin 2\pi n f_1 x)$$

und der Wert der Amplitude $X_1$ erster Ordnung, der Amplitude $X_2$ zweiter Ordnung und der Amplitude $X_3$ dritter Ordnung durch folgende Gleichung darstellt ist:

$X_n = \sqrt{a_n^2 + b_n^2}$ (wobei n = 1,2,3,...);

und ein Wert der Dispersion (D) durch folgende Ungleichung darstellt ist:

$$D = \log_{10}(X_1^2 / \sum_{m=2}^{5} X_m) \leq -1.5$$

und wobei der Wert der Amplitude $X_2$ zweiter Ordnung vergrößert ist, um eine Bedingung zu erfüllen:

$$E_2 = X_2 / \sum_{m=1}^{5} X_m \geq 0.4$$

oder wobei der Wert der Amplitude $X_3$ dritter Ordnung vergrößert ist, um die Bedingung zu erfüllen:

$$E_3 = X_3 / \sum_{m=1}^{5} X_m \geq 0.4$$

und die Längslaufrillen (1,2,3,4,5,6) symmetrisch in bezug auf die äquatoriale Ebene des Reifens angeordnet sind.

**Revendications**

1. Pneumatique à carcasse radiale ayant au moins deux gorges longitudinales continues (1, 2, 3, 4, 5, 6) de la bande de roulement placées dans la direction circonférentielle de la bande de roulement, caractérisé en ce qu'un schéma de distribution d'interaction représentant l'état des interférences entre les bords des gorges (1, 2, 3, 4, 5, 6) et les bords des rainures (21) est représenté approximativement par les formes d'onde et est développé en série de Fourier, la valeur de l'amplitude $X_1$ du premier ordre étant inférieure à la valeur de l'amplitude $X_2$ du second ordre ou de l'amplitude $X_3$ du troisième ordre, la série de Fourier étant représentée par l'équation suivante :

$$I(x) = a_0/2 + \Sigma_{n=1}^{\infty}(a_n \cos 2\pi n f_1 x + b_n \sin 2\pi n f_1 x)$$

EP 0 476 967 B1

et la valeur de l'amplitude $X_1$ du premier ordre, de l'amplitude $X_2$ du second ordre et de l'amplitude $X_3$ du troisième ordre est représentée par l'équation suivante :

$$X_n = \sqrt{a_n^2 + b_n^2} \text{ (avec n = 1, 2, 3,...)}$$

et la valeur de la dispersion (D) est représentée par l'inégalité suivante :

$$D = \log_{10}(X_1^2 / \Sigma_{m=2}^{5} X_m \leq -1,5$$

alors que la valeur de l'amplitude $X_2$ du second ordre est accentuée afin qu'elle remplisse la condition suivante

$$E_2 = X_2 / \Sigma_{m=1}^{5} X_m \geq 0,4$$

ou la valeur de l'amplitude $X_3$ du troisième ordre est accentuée afin qu'elle remplisse la condition :

$$E_3 = X_3 / \Sigma_{m=1}^{5} X_m \geq 0,4$$

et les gorges longitudinales (1, 2, 3, 4, 5, 6) de la bande de roulement sont placées symétriquement par rapport au plan équatorial du pneumatique.

9

F I G . 1

F I G . 2

F I G . 3

F I G . 4

10

F I G. 5

F I G. 6

F I G. 7